(19) **Europäisches Patentamt / European Patent Office / Office européen des brevets**

(11) **EP 4 372 409 A1**

(12) # EUROPEAN PATENT APPLICATION
published in accordance with Art. 153(4) EPC

(43) Date of publication:
**22.05.2024 Bulletin 2024/21**

(21) Application number: **22840962.9**

(22) Date of filing: **17.03.2022**

(51) International Patent Classification (IPC):
**G01S 7/4865** (2020.01)    **G01S 17/89** (2020.01)

(52) Cooperative Patent Classification (CPC):
**G01S 7/48; G01S 7/4865; G01S 17/89;** Y02A 90/10

(86) International application number:
**PCT/CN2022/081303**

(87) International publication number:
**WO 2023/284317 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2021 CN 202110806406**

(71) Applicant: **Hesai Technology Co., Ltd.**
**Shanghai 201821 (CN)**

(72) Inventors:
• **XU, Shuaiqi**
  **Shanghai 201821 (CN)**
• **YANG, Jin**
  **Shanghai 201821 (CN)**
• **ZHANG, Hongyan**
  **Shanghai 201821 (CN)**
• **XIANG, Shaoqing**
  **Shanghai 201821 (CN)**

(74) Representative: **Fish & Richardson P.C.**
**Highlight Business Towers**
**Mies-van-der-Rohe-Straße 8**
**80807 München (DE)**

(54) **DATA PROCESSING METHOD FOR LASER RADAR, AND LASER RADAR**

(57) A data processing method (100) for a LiDAR is provided, which includes: S101: performing k detection sweeps by using an original detection window to obtain a result of the k detection sweeps as a first set of detection data, where k is an integer, and $k \geq 1$; S102: determining, based on the first set of detection data, a position of an echo pulse at an arrival time point within the original detection window; S103: changing, based on the position of the echo pulse, a detection window, wherein the changed detection window includes the position of the echo pulse and is smaller than the original detection window; S104: performing n detection sweeps by using the changed detection window to obtain a result of the n detection sweeps as a second set of detection data, where n is an integer, and $n \geq 1$; and S105: determining, based on the first set of detection data and the second set of detection data, at least one of a distance or a reflectivity of an object. A LiDAR and a computer-readable storage medium are also provided. Only the data about an obstacle is stored in a fine manner, the waveform of the original signal is preserved while the original signal is compressed, small storage space is used, and the ranging capability with a higher precision is obtained.

**100**

S101
Perform k detection sweeps by using original detection window to obtain result of k detection sweeps as first set of detection data, wherein k is integer, and $k \geq 1$

S102
Determine, based on first set of detection data, position of echo pulse at arrival time point within original detection window

S103
Change, based on position of echo pulse, detection window wherein changed detection window includes position of echo pulse and is smaller than original detection window

S104
Perform n detection sweeps by using changeed detection window to obtain result of n detection sweeps as second set of detection data, wherein n is integer, and $n \geq 1$

S105
Determine, based on first set of detection data and second set of detection data or based on second set of detection data, at least one of distance or reflectivity of object

FIG. 3

EP 4 372 409 A1

Description

<u>TECHNICAL FIELD</u>

This disclosure relates to the field of photoelectric detection, and in particular, to a data processing method for a LiDAR and a LiDAR.

<u>BACKGROUND</u>

A LiDAR is a radar system that can detect the characteristic quantity (e.g., the position, speed or the like) of an object by transmitting a laser beam and is an advanced detection method that combines the laser technology with the photoelectric detection technology. Because of its advantages of high resolution, good concealability, strong anti-active interference capability, good low-altitude detection performance, small volume, light weight, or the like, the LiDAR has been widely used in fields such as automatic driving, traffic communication, unmanned aerial vehicles, intelligent robots, resource exploration, or the like.

The LiDAR typically includes multiple detection channels, and each detection channel includes, for example, one or more lasers and one or more detectors. After one laser emits a detection laser beam, a detector corresponding to the detection field of view ("FOV") of the laser is turned on or activated within a predetermined time window and is in a state of being capable of detecting an echo. To ensure the complete detection of an echo, the length of the time window is typically set to be relatively large, and the time window is, for example, set based on the maximum detection distance of the LiDAR. In an actual operation process, the detector receives the echo only within a very short time range, the proportion of the time range to the time window is very small, and as a result, in most time of the time window, the detector receives ambient noise or interference signals instead of a valid echo. The received echo, ambient noise, and interference signals are sampled and stored by a signal processor circuit. Therefore, for the existing storage and ranging method for the LiDAR, a memory with a large capacity is required, and extremely large storage space is consumed. In particular, to improve the long distance ranging capability and obtain one frame of the point cloud, the number of repeated measurements needs to be increased, and in this case, the requirements for storage space are also continuously increased.

The content disclosed in this background is merely techniques known to the applicants and does not necessarily represent the existing technology in the art.

<u>SUMMARY</u>

In view of at least one disadvantage of the existing technology, this disclosure provides a data processing method for a LiDAR. The data processing method includes:

S101: performing k detection sweeps by using an original detection window to obtain a result of the k detection sweeps as a first set of detection data, wherein k is an integer, and $k \geq 1$;

S102: determining, based on the first set of detection data, a position of an echo pulse at an arrival time point within the original detection window;

S103: changing, based on the position of the echo pulse, a detection window, wherein the changed detection window includes the position of the echo pulse and is smaller than the original detection window;

S104: performing n detection sweeps by using the changed detection window to obtain a result of the n detection sweeps as a second set of detection data, wherein n is an integer, and $n \geq 1$; and

S105: determining, based on the first set of detection data and the second set of detection data or based on the second set of detection data, at least one of a distance or a reflectivity of an obj ect.

Based on an aspect of this disclosure, the first set of detection data and the second set of detection data include time information and intensity information corresponding to the time information obtained during the detection sweeps, and step S102 further includes:

generating a first histogram based on the first set of detection data; and
on the first histogram, determining a time point corresponding to a maximum value of an amplitude as the position of the echo pulse, or determining a time range in which an amplitude exceeds a predetermined threshold as the position of the echo pulse.

Based on an aspect of this disclosure, step S103 further includes: changing the detection window with the position of the echo pulse as a center.

Based on an aspect of this disclosure, a range of the original detection window is related to a predetermined maximum detection distance of the LiDAR, and step S104 further includes: not storing detection data outside a range of the changed detection window, or outside a range of the changed detection window, turning off a receiver, and performing no detection.

Based on an aspect of this disclosure, step S105 includes: determining, based on the first set of detection data and the second set of detection data, at least one of the distance or the reflectivity of the object, and calibrating, based on the second set of detection data, at least one of the distance or the reflectivity of the object.

Based on an aspect of this disclosure, the first set of detection data and the second set of detection data are stored in a first storage manner or a second storage manner, wherein the first storage manner includes storage based on a weight of the time information at a first time precision, the second storage manner includes storage based on a time resolution of the LiDAR, the first time precision is m times the time resolution, and m > 1.

Based on an aspect of this disclosure, the first set of detection data is stored in the first storage manner, and the second set of detection data is stored in the second storage manner.

Based on an aspect of this disclosure, the weight includes a first weight and a second weight, the first weight is associated with a time interval between the time information and one of adjacent first time scales, the second weight is associated with a time interval between the time information and the other one of adjacent first time scales, and the first storage manner includes: storing the intensity information based on the first weight and the second weight, respectively, at the first time precision.

Based on an aspect of this disclosure, the k detection sweeps and the n detection sweeps jointly complete one detection for one point in a three-dimensional environment, and k > n.

This disclosure also provides a LiDAR. The LiDAR includes:

a transmitter, configured to transmit a laser pulse to a three-dimensional environment to perform multiple detection sweeps;

a receiver, configured to receive an echo pulse of the laser pulse reflected by an object and convert the echo pulse into an electrical signal;

a time-to-digital converter, coupled to the transmitter and the receiver to determine detection data;

a memory, coupled to the time-to-digital converter and configured to store the detection data; and

a processor, coupled to the time-to-digital converter and the memory and configured to perform the following operations:

S201: for first k detection sweeps, obtaining and storing a first set of detection data within an original detection window, wherein k is an integer, and k ≥ 1;

S202: determining, based on the first set of detection data, a position of an echo pulse at an arrival time point within the original detection window;

S203: changing, based on the position of the echo pulse, a detection window, wherein the changed detection window includes the position of the echo pulse and is smaller than the original detection window;

S204: for subsequent n detection sweeps, obtaining and storing a second set of detection data within the changed detection window, wherein n is a positive number, and n ≥ 1; and

S205: determining, based on the first set of detection data and the second set of detection data or based on the second set of detection data, at least one of a distance or a reflectivity of the obj ect.

Based on an aspect of this disclosure, the detection data includes time information and intensity information corresponding to the time information obtained from each detection sweep, and step S202 further includes:

generating a first histogram based on the first set of detection data; and

on the first histogram, determining a time point corresponding to a maximum value of an amplitude as the position of the echo pulse, or determining a time range in which an amplitude exceeds a predetermined threshold as the position of the echo pulse.

Based on an aspect of this disclosure, step S203 includes: changing the detection window with the position of the echo pulse as a center.

Based on an aspect of this disclosure, a range of the original detection window is related to a predetermined maximum detection distance of the LiDAR, and step S204 further includes: not storing detection data outside a range of the changed detection window, or outside a range of the changed detection window, turning off the receiver, and performing no detection.

Based on an aspect of this disclosure, step S205 further includes: determining, based on the first set of detection data and the second set of detection data, at least one of the distance or the reflectivity of the object, and calibrating, based on the second set of detection data, at least one of the distance or the reflectivity of the object.

Based on an aspect of this disclosure, the first set of detection data and the second set of detection data are stored in a first storage manner or a second storage manner, wherein the first storage manner includes storage based on a weight of the time information at a first time precision, the second storage manner includes storage based on a time resolution of the LiDAR, the first time precision is m times the time resolution, and m > 1.

Based on an aspect of this disclosure, the first set of detection data is stored in the first storage manner, and the second set of detection data is stored in the second storage manner.

Based on an aspect of this disclosure, the weight includes a first weight and a second weight, the first weight is associated with a time interval between the time information and one of adjacent first time scales, the second weight is associated with a time interval between the time information and the other one of adjacent first time scales, and the first storage manner includes: storing the intensity information based on the first weight and the second weight, respectively, at the first time precision.

Based on an aspect of this disclosure, the receiver includes a SPAD array, and the detection data includes a time point at which the SPAD array is triggered by photon and a number of triggered SPADs.

This disclosure further provides a computer-readable storage medium including computer-executable instructions stored thereon, wherein the computer-executable instructions, when executed by a processor, perform the data processing method described above.

In the technical solutions of this disclosure, only data about obstacles is stored in a fine manner, and a pulse waveform of the original signal can be preserved while the original signal is compressed, thereby providing the ranging capability with a higher precision on the basis of relatively small storage space.

## BRIEF DESCRIPTION OF THE DRAWINGS

The drawings forming a part of this disclosure are used to provide a further understanding of this disclosure. The example embodiments and descriptions thereof in this disclosure are used to explain this disclosure and do not form an undue limitation on this disclosure. In the drawings:

FIG. 1 shows a schematic diagram of the triggering of a single-photon avalanche diode in the process of multiple detection sweeps of a LiDAR;
FIG. 2 shows a histogram formed by accumulating multiple detection sweeps of a LiDAR;
FIG. 3 shows a flowchart of a data processing method based on an embodiment of this disclosure;
FIG. 4 shows a detector module of a LiDAR based on an embodiment of this disclosure;
FIG. 5 shows a schematic diagram of a data storage method of the existing technology;
FIG. 6 and 7 show schematic diagrams of a storage manner based on preferred embodiments of this disclosure;
FIG. 8 shows a schematic diagram of a storage effect based on an embodiment of this disclosure;
FIG. 9 shows a schematic diagram of a data processing method based on an embodiment of this disclosure;
FIG. 10 shows a module diagram of a LiDAR based on an embodiment of this disclosure;
FIG. 11 shows a flowchart of a data processing method based on an embodiment of this disclosure.

## DETAILED DESCRIPTION

In the following, some example embodiments are described. The described embodiments can be modified in various different ways without departing from the spirit or scope of this disclosure, as would be apparent to those skilled in the art. Accordingly, the drawings and descriptions are to be regarded as illustrative and not restrictive in nature.

In the description of this disclosure, it needs to be understood that the orientation or position relations represented by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position relations as shown in the accompanying drawings, and are used only for the purpose of facilitating description of this disclosure and simplification of the description, instead of indicating or suggesting that the represented devices or elements must be oriented specifically, or configured or operated in a specific orientation. Thus, such terms should not be construed to limit this disclosure. In addition, such terms as "first" and "second" are only used for the purpose of description, rather than indicating or suggesting relative importance or implicitly indicating the number of the represented technical features. Accordingly, features defined with "first" and "second" can, expressly or implicitly, include one or more of the features. In the description of this disclosure, "plurality" means two or more, unless otherwise defined explicitly and specifically.

In the description of this disclosure, it needs to be noted that, unless otherwise specified and defined explicitly, such terms as "installation" "coupling" and "connection" should be broadly understood as, for example, fixed connection, detachable connection, or integral connection; or mechanical connection, electrical connection or intercommunication;

or direct connection, or indirect connection via an intermediary medium; or internal communication between two elements or interaction between two elements. For those skilled in the art, the specific meanings of such terms herein can be construed in light of the specific circumstances.

Herein, unless otherwise specified and defined explicitly, if a first feature is "on" or "beneath" a second feature, this can cover direct contact between the first and second features, or contact via another feature therebetween, other than the direct contact. Furthermore, if a first feature is "on", "above", or "over" a second feature, this can cover the case that the first feature is right above or obliquely above the second feature, or just represent that the level of the first feature is higher than that of the second feature. If a first feature is "beneath", "below", or "under" a second feature, this can cover the case that the first feature is right below or obliquely below the second feature, or just represent that the level of the first feature is lower than that of the second feature.

The following disclosure provides many different embodiments or examples for implementing different structures of this disclosure. To simplify this disclosure, components and configurations of specific examples are described below, which are illustrative only and are not intended to limit this disclosure. In addition, this disclosure can use at least one of repeated reference numerals or letters in the various examples. This repetition is for the purpose of simplicity and clarity and does not in itself represent a relationship among the various embodiments or configurations discussed. In addition, this disclosure provides examples of various specific processes and materials, however, those skilled in the art can recognize applicability of other processes and/or use of other materials.

The single photon avalanche diode ("SPAD") is an avalanche photo diode ("APD") that operates in a Geiger mode state and can perform single-photon detection. The specific process of photon detection is as follows. A particular reverse bias voltage Vbias is applied to an APD, the photon carrying the energy is incident on the PN junction, and the energy is transmitted to the electron on the covalent bond so that the electron breaks from the covalent bond to form an electron-hole pair, which is also referred to as a photon-generated carrier. If the reverse bias voltage Vbias is large enough, the photon-generated carrier of the depletion layer can obtain sufficiently high kinetic energy so that the covalent bond can be broken to produce more electron-hole pairs during the impact with the lattice. This process is also referred to as impact ionization. The new carrier causes new impact ionization continuously, resulting in a chain effect and an avalanche multiplication effect of the carrier. In this way, a pulse current that is large enough to be detected is obtained, such as a pulse current in the order of mA, thereby achieving the single-photon detection. The photon detection efficiency ("PDE") is an important parameter of the SPAD and characterizes an average probability that the photon can trigger an avalanche and be detected after the photon is incident on the SPAD. The PDE can be represented by using Equation 1 below:

$$PDE = \varepsilon_{geo} * QE * \varepsilon_{trigger} \qquad \text{(Equation 1)}$$

In Equation 1, $\varepsilon_{geo}$ characterizes a geometric fill factor, QE characterizes quantum efficiency, that is, a probability that an electron-hole pair is generated, and $\varepsilon_{trigger}$ characterizes a probability that the electron-hole pair further triggers the avalanche.

In addition, PDE also characterizes the capability of the SPAD to detect a single-photon signal and can be represented as: the number of detected photons/the total number of incident photons.

In a detection process of the LiDAR, taking a detector array formed by the SPADs as an example, because the SPAD operates in a Geiger mode and an avalanche effect can be triggered by a single photon, the SPADs can be susceptible to ambient light noise. In another aspect, the SPADs can have a relatively low PDE for a waveband of common detection light of a LiDAR, and the intensity of the signal obtained by a single detection is relatively weak.

To improve the signal-to-noise ratio, for a ranging apparatus that uses an array of SPADs, time-correlated single-photon counting ("TCSPC") is typically used for ranging. The basic idea of measuring time information of photon is, with the photon considered as a random event, to make statistics after repeating the measurement of the photon for multiple cycles.

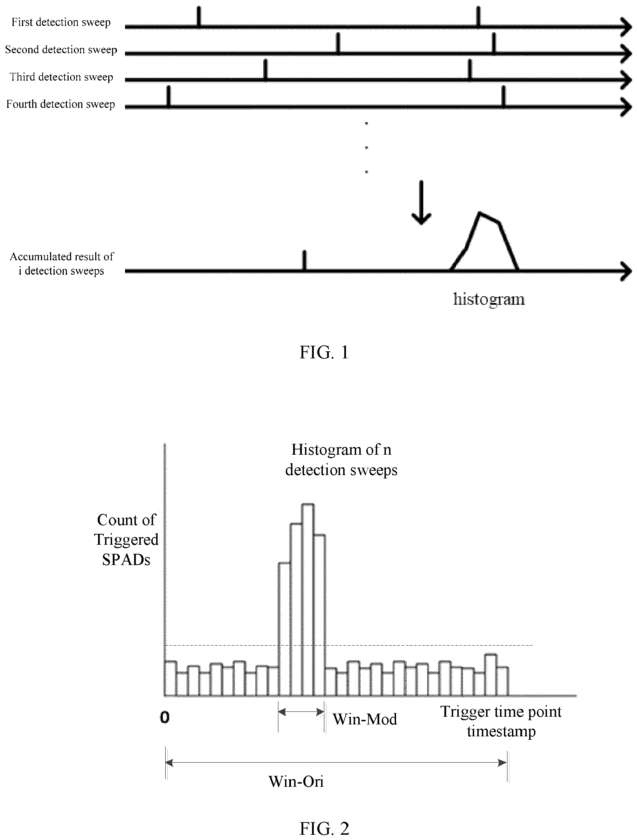

As shown in FIG. 1, for any point, during the process of one detection (to obtain data information such as a distance and reflectivity of one point in the point cloud), only several triggering (two triggering in FIG. 1) can occur within the detection time window (where the SPAD is in an operation mode only within a predetermined time window, that is, in a state in which an avalanche effect can be triggered by the photon, and the time window is referred to as a "detection time window"), and whether the triggering is induced by the echo signal reflected by the object or by ambient light noise cannot be distinguished. To improve the long distance ranging capability and the signal-to-noise ratio of the LiDAR, referring to FIG. 1, in the process when the LiDAR performs one detection (or measurement) on any point of an object in the same FOV range, the LiDAR can repeatedly perform multiple detection sweeps (where the number of repeated detection sweeps can be up to 400 to 500 or can be more or less), the results of the multiple detection sweeps are accumulated to obtain a histogram, and further calculation and processing can be performed based on the histogram for ranging to obtain the distance and reflectivity information of one point in the point cloud of the LiDAR.

For each detection sweep, the controller of the LiDAR triggers a light source at the transmitting end to emit a light pulse for detection at the transmitting time point t1 and records the transmitting time point t1. The light pulse encounters an external obstacle, is reflected by the obstacle, returns to the LiDAR, and is received by the photodetector at the receiving end at the time point t2. When the photodetector is an array of SPADs, ambient light can also trigger the avalanche of the SPAD. Once the photon is received by the SPAD, an avalanche electrical signal is generated and transmitted to a time-to-digital converter ("TDC"), and the TDC outputs a time signal of the triggering of the SPAD and a count signal of the SPADs triggered at the same time point t2 (this is the case when one pixel includes multiple SPADs; when one pixel includes only one SPAD, the count signal is not present, and the SPAD has only two states: triggered and not triggered). The memory subsequently stores a timestamp (e.g., time information represented by the horizontal axis in FIGs. 1 and 2) obtained by subtracting the transmitting time point t1 from the triggering time point t2 of the SPAD and stores the signal of the triggering count (hereinafter referred to as cnt) corresponding to the timestamp.

The triggering count cnt obtained from each detection sweep is stored in a corresponding position in the memory based on the timestamp. When a new triggering count cnt arrives in the position corresponding to a particular timestamp, the originally stored value is accumulated with the new triggering count cnt and then the result is updated to the position. The data stored in the memory after accumulation of multiple detection sweeps forms a histogram, referring to FIG. 2, and the histogram reflects the sum of triggering counts cnt corresponding to different timestamps on the time axis obtained from the multiple detection sweeps. In this way, the time of flight ("TOF") corresponding to the echo pulse is obtained through some operations, such as calculating the center of gravity using the histogram, and then a ranging result is obtained.

Therefore, based on the embodiments described above, in one measurement of the distance or reflectivity information of each point within one FOV range, the LiDAR actually performs multiple detection sweeps (multiple transmitting-receiving cycles), where the number of sweeps can range from dozens to hundreds. Multiple sweeps are performed on any point within one FOV range in one time period, and the curves of the intensity information received by the detector at the same time information during the multiple sweeps are accumulated as the intensity information-time information curve. For example, referring to FIG. 1, in the first, second,..., and $i^{th}$ sweeps, only a very limited number of echoes or photons are received during each sweep, but after the detection results of the i sweeps are accumulated, a histogram of the number of photons for one TOF measurement within the FOV range is obtained, referring to FIG. 2, where the scale of the abscissa is time information, and the scale width on the time axis is typically equal to the resolution of the TDC in the LiDAR, that is, the resolution of the detection time of the LiDAR.

In the context of this disclosure, "measurement" (or "detection") is distinguished from "detection sweep" (or "sweep"). Specifically, one "measurement" corresponds to a TOF measurement within a particular FOV range in one detection period (i.e., a period in which one frame of the point cloud is generated) of the LiDAR to generate one or more "points" (one or more columns of points or a bunch of points) in one frame of point cloud map, and after measurements within all of the FOV ranges are completed, one complete frame of the point cloud is obtained. The "detection sweep" refers to the process where the laser in one detection channel completes one transmission and the detector completes the corresponding reception during one measurement. One "measurement" can include one "detection sweep" or can include multiple "detection sweeps" for the same object point, such as hundreds of detection sweeps.

Preferred embodiments of this disclosure are described in detail in conjunction with the drawings, and it should be understood that the preferred embodiments described hereinafter are only intended to describe and explain this disclosure and not to limit this disclosure.

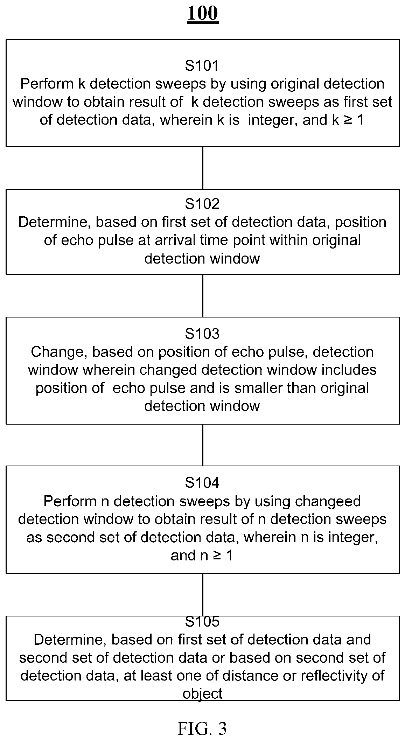

This disclosure relates to a data processing method for a LiDAR. Referring to FIG. 3, the data processing method 100 includes steps S101 to S105.

In step S101, k detection sweeps are performed by using an original detection window to obtain a result of the k detection sweeps as a first set of detection data, where k is an integer, and k ≥ 1.

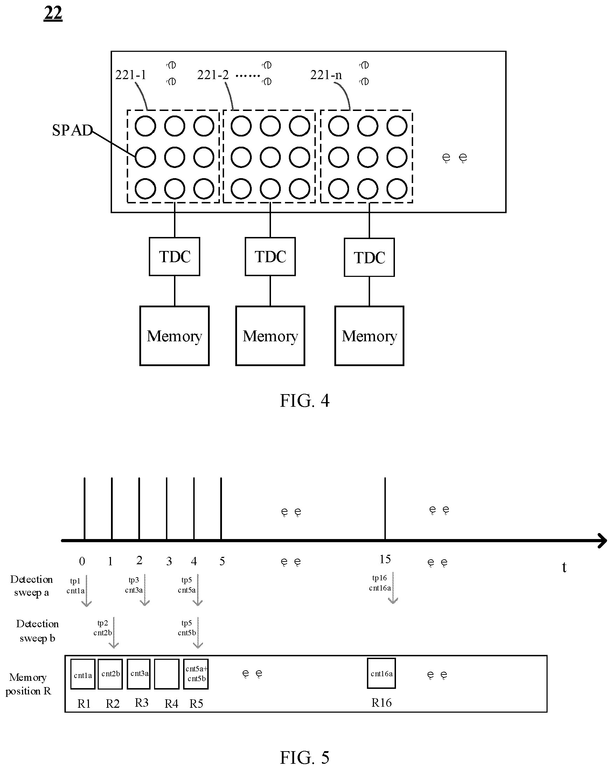

FIG. 4 shows a detector module 22 based on an embodiment of this disclosure, and the detector module 22 can be applied to LiDAR. The detector module 22 includes multiple detector 221-1, 221-2, ..., and 221-n. Each detector (corresponding to one pixel) includes multiple SPADs (the number of SPADs, for example, is nine in the figure or can be three, four or other numbers, specifically p, where p is a positive integer greater than or equal to 1). The output terminals of SPADs of each detector are connected to a TDC. The range of the detection window(i.e., the time period when the SPAD can sense the incident photon) of each detector is independently adjustable, that is, each detector can be independently controlled to be in an activated state (the SPAD is in a Geiger mode, i.e., a reverse bias voltage greater than a breakdown voltage is applied to the SPAD so that an avalanche effect can be triggered when the SPAD receives the photon) or a deactivated state (a state in which no avalanche can be triggered by the photon).

After the photon is incident on the detector 221-1, 221-2, ..., and 221-n, the SPADs are triggered and generate electrical signals. Each detector is coupled to a TDC, and the TDC can determine the arrival time of the photon. The data processor apparatus (not shown in FIG. 5) connected to the TDC can acquire or provide the transmitting time of a detection laser beam, and the TDC thus can determine the time difference between the arrival time of the photon and the transmitting time of the detection laser beam as time information and store the time information in a memory.

Taking the detector 22 shown in FIG. 4 as an example, the first set of detection data obtained from the k detection sweeps includes the time information and the intensity information corresponding to the time information obtained during each detection sweep, where the time information is a triggering time point (timestamp) of one or more SPADs in the detector, that is, a time difference between a time at which a laser emits light and a time at which the SPAD is triggered, and the intensity information is the number of SPADs triggered at the triggering time point, that is, the number of triggered SPADs represents the intensity of an optical signal. The first set of detection data is as shown in FIG. 1, and for each detection sweep, the triggering time point of the SPAD and the number of SPADs triggered each time can be obtained.

The range of the original detection window is, for example, related to a predetermined maximum detection distance of the LiDAR, for example, the range of the original detection window can be set to be equal to or slightly less than the time corresponding to the maximum detection distance, or range of the original detection window is related to the capacity of the memory. Based on an embodiment of this disclosure, the range of the triggering time point in which there is a photon triggering can be considered as an original detection window, as shown in the original detection window Win-Ori in FIG. 2.

In this disclosure, each measurement includes, for example, (k + n) detection sweeps. The value of (k + n) affects the final detection result. For example, within a particular range, the larger the value of (k + n) is, the higher the precision of the detection result is, but the required calculation amount and storage space are larger.

In the embodiment of FIG. 5, the time information and the intensity information are described by using the SPAD as an example. It is readily understood by those skilled in the art that this disclosure is not limited thereto, and other types of photodetectors can be used, including, but not limited to, APD, silicon photomultipliers ("SiPM"), and the like. For different photodetectors, the intensity information can be characterized by using different parameters. For example, when the photodetector is an array of SPADs, the number of SPADs triggered simultaneously corresponding to the time information can be taken as the intensity information; if the photodetector is a SiPM, the intensity information of the optical signal can be characterized by the intensity of the output level/current corresponding to the time information.

In step S102, a position of an echo pulse at an arrival time point within the initial detection window is determined based on the first set of detection data.

Specifically, based on the method shown in FIG. 1, after k detection sweeps are performed, the first set of detection data is obtained, and a first histogram is generated based on the first set of detection data. Referring to FIG. 2, the time point at which an echo pulse arrives can be roughly determined based on the first histogram and is distinguished from the triggering time point of ambient light.

Based on an embodiment of this disclosure, in the first histogram, the time point corresponding to the maximum value of the amplitude or the triggering count is determined as the position of the echo pulse at the arrival time point within the original detection window. Alternatively, the time range in which the amplitude or the triggering count exceeds a predetermined threshold (as shown by a dashed line in FIG. 2) is determined as the position of the echo pulse at the arrival time point within the original detection window, as shown in the window Win-Mod in FIG. 2. In this disclosure, the position of the echo pulse determined in step S 102 can also be referred to as a "rough position". Because only the first k detection sweeps have been performed in the current measurement and the current measurement is not completed, the rough position of the echo pulse is determined based on the detection result of the first k detection sweeps.

In step S103, a detection window is changed based on the position of the echo pulse so that the changed detection window includes the position of the echo pulse and is smaller than the original detection window.

After the rough position of the echo pulse is determined in step S102, in the process of subsequent sweeps of the current measurement, the echo pulse is usually located at or near the rough position. Therefore, in step S103, the detection window can be changed based on the rough position so that in the process of subsequent sweeps, the receiving and processing of data do not need to be performed within the entire range of the original detection window, instead, the receiving and processing of data can be performed only within the changed detection window which is smaller. For the change of the detection window, it needs to be ensured that the rough position of the echo pulse is within the changed detection window, and the changed detection window needs to be smaller than the original detection window.

The position of the echo pulse determined in step S 102 can be a specific triggering time point or can be a time range. When the position of the echo pulse is one or more triggering time points, each triggering time point can be taken as a center and a predetermined window is superimposed onto the center, that is, a period of time before and after the triggering time point is taken as the changed detection window.

Preferably, the triggering time point is not a center of the superimposed predetermined window, as long as the superimposed predetermined window includes the triggering time point. When the position of the echo pulse is one or more time ranges, the time ranges can be taken as the changed detection window. Alternatively, each time range can be taken as a center and a predetermined window is superimposed onto the center, that is, a period of time before and after the time range is taken as the changed detection window. Alternatively, the triggering time point is not be a center of the superimposed predetermined window, as long as the superimposed predetermined window includes the time range. Based on an embodiment of this disclosure, when the position of the echo pulse is one or more time ranges, the time range can be widened to the left and right by a particular proportion, such as 10% or 20%, respectively, to obtain the changed detection window.

In step S104, n detection sweeps are performed by using the changed detection window to obtain the result of the n detection sweeps as a second set of detection data, where n is an integer, and n > 1.

After the detection window is changed in step S103, for the remaining n detection sweeps of the current measurement, the measurement is performed using the changed detection window to obtain the second set of detection data. The second set of detection data includes, for example, the time information and the intensity information corresponding to the time information obtained during each detection sweep.

Based on a preferred embodiment of this disclosure, the k detection sweeps and the n detection sweeps jointly complete one measurement for one point in a three-dimensional environment. In other words, to complete one measurement, the first k detection sweeps need to be performed first and the data is stored as the first set of detection data, and then n detection sweeps need to be performed and the data is stored as the second set of detection data. Preferably, k > n to improve ranging precision, that is, when k > n, the ranging precision can be improved compared with the case where k ≤ n.

Based on a preferred embodiment of this disclosure, during the n detection sweeps, some measures can be taken for detection data outside the range of the changed detection window, for example, data outside the range of the changed detection window is not stored, to reduce the calculation amount and storage space. Because the detection data outside the range of the detection window is taken as ambient noise or interference signals after the rough position of the echo pulse is determined and the detection window is changed, the detection data is not stored, thereby improving the detection efficiency and the signal-to-noise ratio. Alternatively, the receiver (e.g., a photodetector or a TDC) is turned off outside the range of the changed detection window, and the detection is not performed, thereby reducing the system power consumption.

In step S105, a distance and/or a reflectivity of an object are determined based on the first set of detection data and the second set of detection data or based on the second set of detection data.

Specifically, a second histogram similar to the histogram in FIG. 2 is generated based on the first set of detection data and the second set of detection data. In this way, the TOF of the echo pulse can be calculated based on the second histogram, the distance from the object is determined, and the reflectivity of the object can also be determined. Alternatively, the TOF of the echo pulse can be calculated only based on the histogram generated by the second set of detection data, and then the distance from the object is determined.

Based on a preferred embodiment of this disclosure, the distance and the reflectivity of the object are determined based on the first set of detection data and the second set of detection data, and the distance and the reflectivity of the object are calibrated based on the second set of detection data. By combining two sets of detection data, more precise information about the object is obtained. For example, a rough position of the object is determined based on the first set of detection data and then is calibrated based on the second set of data to obtain a more precise position.

For another example, two sets of detection data are combined to obtain the precise position of the object. For another example, two sets of detection data are combined to obtain a rough position of the object, and then the rough position is calibrated based on the second set of data. It should be understood by those skilled in the art that one detection is divided into two or more groups of detection sweeps, the parameters of the subsequent detection sweeps are directed or changed by using data from the previous sweeps to obtain two or more sets of detection data, and then the distance from the object is determined based on the two or more sets of detection data, which are all within the protection scope of this disclosure.

In the embodiments described above, each measurement includes, for example, (k + n) detection sweeps, and the (k + n) detection sweeps are divided into two groups: the first k detection sweeps and the subsequent n detection sweeps. A rough position of an echo pulse can be obtained through the first k detection sweeps, and then the subsequent n detection sweeps are directed by using the rough position. Specifically, the detection window of the subsequent n detection sweeps is changed based on the rough position so that in the process of the subsequent n detection sweeps, the reception and outputting processing of signals does not need to be performed within the entire original detection window, instead, the reception of signal and processing of data can be performed only within the changed detection window, thereby reducing the power consumption, the storage amount, and the data processing amount of the LiDAR.

In the TDC of some LiDARs, each time scale of the time resolution of the TDC requires one corresponding storage position, and the count cnt of all triggered SPADs obtained from multiple detection sweeps is stored in the storage position corresponding to the time point. Because the time resolution of the TDC can be of the order of picoseconds ("ps"), a register with a great deal of storage space is required.

FIG. 5 shows a data storage method of the existing technology. One memory is provided for each triggering time point timestamp, for example, the memories R1, R2, ..., and R16 shown in FIG. 5. The storage scheme is described in detail below referring to FIGs. 4 and 5.

FIG. 4 shows a detector module of a LiDAR based on an embodiment of this disclosure. The detector module 22 includes multiple detector, which are detector 221-1, 221-2, ..., and 221-n shown in FIG. 4. Each detector includes multiple SPADs (the number of SPADs, for example, is nine in the figure or can be three, four or other numbers, specifically p, where p is a positive integer greater than or equal to 1). The output terminals of SPADs of each detector are connected to a TDC. The range of the detection window (i.e., the time period when the SPAD can sense the incident photon) of each detector is independently adjustable, that is, each detector can be independently controlled to be in an activated state (the SPAD is in a Geiger mode, that is, a reverse bias voltage greater than a breakdown voltage is applied to the SPAD so that an avalanche effect can be triggered when the SPAD receives the photon) or a deactivated state (a state in which no avalanche can be triggered by the photon). After the photon is incident on the detector 221-1, 221-2, ..., and 221-n, the SPADs are triggered, and generate electrical signals.

Each detector is coupled to a TDC, and the TDC can determine the arrival time of the photon. The data processor apparatus (not shown in FIG. 4) connected to the TDC can acquire the transmission time of detection light, determine the time difference between the arrival time of the photon and the transmission time of the detection light, and store the result in a memory.

Taking the detector module 22 shown in FIG. 4 as an example, the output terminals of multiple SPADs are connected to the same TDC as a macro-pixel, the time information is the time point at which one or more SPADs in the macro pixel are triggered, and the intensity information is the number of SPADs that are triggered at the triggering time point, that is, the intensity of the optical signal is characterized through the number of the triggered SPADs.

In the embodiment of FIG. 4, the description is given with the SPAD as an example. It is readily understood by those skilled in the art that this disclosure is not limited thereto, or another type of photodetector can be used, including, but not limited to, an avalanche photodiode ("APD"), a silicon photomultiplier ("SiPM"), and the like.

Through the detector module 22 shown in FIG. 4, for one detection sweep, the controller of the LiDAR gates part (one row, one column or any shape of interest) of macro-pixels by supplying a high voltage to the SPADs and then sends a synchronization signal to inform the lasers at the transmitting end that they can emit light; the lasers at the transmitting end emit a light pulse for detection at the time point $t_a$ ($a$ represents the $a^{th}$ detection sweep); the light pulse encounters an external obstacle, is reflected by the obstacle, returns to the LiDAR, and can be received by the photodetector at the receiving end.

When the photodetector is a SPAD array, once the photon is received by the SPAD, an avalanche electrical signal is generated and transmitted to the TDC, and the TDC outputs a time signal $t_{1a}$ of the triggering of the SPAD and a count signal $cnt_{1a}$ of the SPADs triggered at the same time point (here $1a$ represents the first triggering of the $a^{th}$ detection sweep). The triggering time point timestamp$_{1a}$ (hereinafter referred to as tp$_{1a}$) of $t_{1a}$ - $t_a$ is calculated by the subtraction program, and the tp$_{1a}$ and the count signal $cnt_{1a}$ of SPADs triggered at the triggering time point are transmitted to and stored in the memory. One macro-pixel includes multiple SPADs, and the SPAD can perform detection again after the dead time. Therefore, during one detection sweep, the SPAD can be triggered again at another time point, and the memory stores tp$_{2a}$ and $cnt_{2a}$ of this triggering ($2a$ represents the second triggering of the $a^{th}$ detection sweep). Multiple triggering in one detection sweep need to be stored based on time information.

During the next detection sweep $b$, the controller of the LiDAR transmits a signal again based on a predetermined program to control the transmitting end to transmit a detection light pulse at the time point $t_b$. Once the photon is received by the SPAD, an avalanche electrical signal is transmitted to the TDC, and the TDC outputs a time signal $t_{1b}$ of the triggering of the SPAD and a count signal $cnt_{1b}$ of the SPADs triggered at the same time point (here $1b$ represents the first triggering of the $b^{th}$ detection sweep). Subsequently, the triggering time point timestamp$_{1b}$ (hereinafter referred to as tp$_{1b}$) of the SPAD triggering time $t_{1b}$ - $t_b$ and the count signal $cnt_{1b}$ of SPADs triggered at the triggering time point are stored in the memory. One macro-pixel includes multiple SPADs, and the SPAD can perform detection again after the dead time. Therefore, during one detection sweep, the SPAD can be triggered again at another time point, and the memory stores tp$_{2b}$ and $cnt_{2b}$ of this triggering.

During the hundreds of detection sweeps, the triggering count cnt obtained from each detection sweep is stored at the corresponding position in the memory based on the triggering time point timestamp. When a new triggering count cnt arrives at the corresponding position of the same triggering time point timestamp, the originally stored value is accumulated with the new triggering count cnt and then the result is updated and stored to the position. After the results of the n detection sweeps are accumulated, a histogram is stored in the memory, and still referring to FIG. 2, the histogram reflects the sum of the triggering counts cnt corresponding to different triggering time point timestamp on the time axis. In this way, the time information corresponding to the echo is obtained through the operations of calculating the center of gravity or the leading-edge time using the histogram and taken as the time of flight for distance calculation, and one point in the point cloud can be generated.

In the data storage method shown in FIG. 5, the abscissa is the time t, the scale interval of the abscissa is the time resolution of the TDC, and each time scale corresponds to one storage position R (register). For example, during a particular detection sweep $a$, a SPAD triggering occurs at the time scale 0, a triggering time point tpi (triggering time - transmission time of current detection sweep) and triggering count information $cnt_{1a}$ are calculated based on the transmission time and the triggering time transmitted by the TDC, and the triggering count information $cnt_{1a}$ is stored in the storage position R1 corresponding to the time point tpi. A SPAD triggering occurs at the time scale 4, the time

information $tp_5$ and $cnt_{5a}$ are obtained, and $cnt_{5a}$ is stored in the storage position R5 corresponding to $tp_5$. During another detection sweep $b$, a SPAD triggering also occurs at the time scale 4, the time information $tp_5$ and $cnt_{5b}$ are obtained, and $ent_{5b}$ also corresponds to the storage position R5. At this time, $cnt_{5a}$ is read out, and the sum of $cnt_{5b}$ and $cnt_{5a}$ is updated to R5. $a$ represents the $a^{th}$ detection sweep, $b$ represents the $b^{th}$ detection sweep, and the numeral represents a corresponding time scale and a corresponding storage position; the storage position R is in one-to-one correspondence with the time scale, the memory stores only the triggering count cnt, and the data processor circuit can obtain the time corresponding to the triggering count cnt based on the storage position when reading data.

Referring to FIGs. 2 and 5, one histogram is obtained by accumulating the data of multiple detection sweeps (400 to 500 detection sweeps), and in the process of obtaining a histogram from the accumulation of results of hundreds of detection sweeps and obtaining a point in the point cloud, the storage position corresponding to a particular time scale stores the accumulated sum of the counts cnt of all triggering occurring at the time point. Although the SPAD triggering does not occur at each time scale during a single sweep, for example, referring to FIG. 1, the histogram data is generated from the accumulation of results of multiple detection sweeps, and at each time scale, there can be a SPAD triggering occurring during a particular sweep so that the memory receives corresponding data. Therefore, for a TDC, each time scale requires one corresponding storage position, and all the triggering counts cnt obtained from multiple detection sweeps are stored in the storage position corresponding to the time point. Because the time interval of tp, that is, the resolution of the TDC, can be in the order of picosecond ("ps"), a register with a great deal of storage space is required.

With such storage and ranging method, because the precision of the triggering time point timestamp is in the order of ps, when a long TOF detection is performed, the storage of a complete histogram requires a large memory and consumes a great deal of storage space. In particular, to improve the long distance ranging capability, the time length of the detection and the number of repeated detection sweeps need to be increased, and the requirement for the storage space is also increased.

Based on an embodiment of the present disclosure, the data storage method with weighted accumulation is used to compress the original signal while the ranging precision is preserved, thereby greatly reducing the storage space required for storing the histogram. After the approximate range of the object is determined, by means of the measurement using a "zoom-in" operation, the calculation amount required for generating a histogram can be reduced while keeping track of the object, thereby reducing the power consumption of the system.

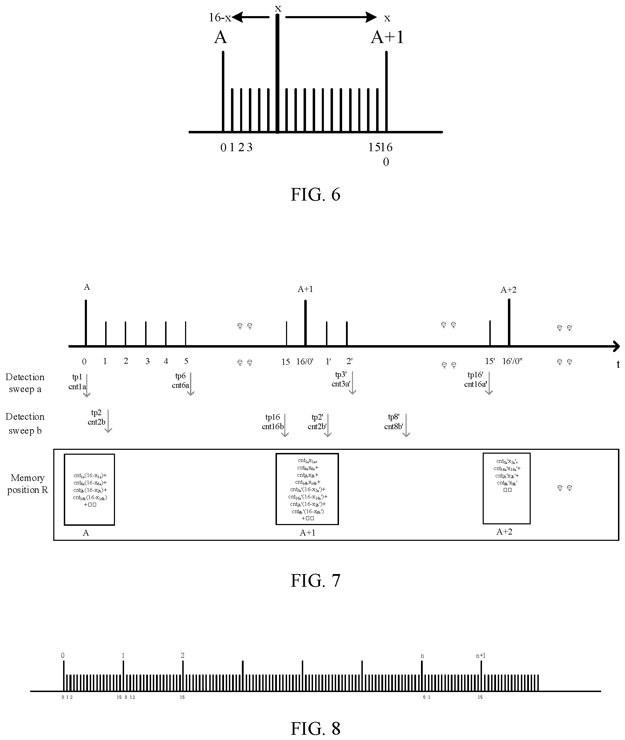

In FIG. 6, the abscissa is the time of flight, and the interval of the time scale of the abscissa is, for example, the time resolution of the LiDAR, for example, the time resolution of the TDC, which can be in the order of ps. Still referring to FIG. 6, a first time scale is set on the basis of the time resolution of the LiDAR. Referring to A and A+1 in FIG. 6, the interval between two adjacent first time scales crosses 16 intervals of the time resolution of the LiDAR. When the photon is detected at the time point x (e.g., one or more SPADs in one detector of the receiver 22 shown in FIG. 4 are triggered), the detected intensity value is stored based on the weight of the time point x. The time point x means that the time interval between the time point and the adjacent first time scale A to the left of the time point is x times the time resolution.

It is readily appreciated by those skilled in the art that the time resolution of the LiDAR is small and the interval of the first time scale is relatively large, the time scale corresponding to the time resolution of the LiDAR can also be referred to as a "fine scale", and the first time scale can also be referred to as a "rough scale".

Still referring to FIG. 6, the weight of the time point x includes a first weight and a second weight, the first weight is associated with a time interval between the time point x and one of adjacent first time scales, and the second weight is associated with a time interval between the time point x and the other one of adjacent first time scales. After the first weight and the second weight are determined, the intensity information can be stored based on the first weight and the second weight, respectively, at the first time precision.

Based on a preferred embodiment of this disclosure, the first weight is associated with a time interval between the time point x and the adjacent first time scale A to the left of the time point x, and the first weight, for example, is (16 - x); the second weight is associated with a time interval between the time point x and the adjacent first time scale A+1 to the right of the time point x, and the second weight, for example, is x. Therefore, the time point x is represented as its weights at two adjacent rough scales (A and A+1) instead, where the weight of x on the rough scale A is (16 - x), and the weight on the rough scale A+1 is x (x characterizes the distance from the time point to A), as an equivalent to the fine scale of the time point x. In other words, by taking x as a weight, the data at the fine scale is stored on the addresses corresponding to the two adjacent rough scales to represent the value at the scale x, instead of storing the scale x itself. This process is represented by the following equation:

$$A * (16 - x) + (A + 1) * x = A * 16 + x \qquad \text{(Equation2)}.$$

In the Equation 2, the left on the equal sign is the sum of the starting value and the ending value of the rough scale stored using the rough scale, weights are applied to the starting value and the ending value, and the right of the equal sign is the specific value of the triggering time point. The specific value of the triggering time point can be represented by using the storage method of rough scale in combination with weight.

Similarly, when the signal obtained from the triggering further includes, in addition to the triggering time point, the triggering count cnt indicating the number or the intensity of the triggering, the newly-added intensity information at the rough scale A is cnt*(16 - x), and the newly-added intensity information at the rough scale A+1 is cnt*x, which are accumulated during multiple sweeps, respectively. A detailed description is given below, for example, referring to FIG. 7. The fine scale represents the time resolution of the TDC. For a particular triggering time point timestamp, the starting value of its rough scale is A, and its fine scale is at the scale x on the corresponding 0-15 fine scale plate in its rough scale.

Still referring to FIG. 7, one register is assigned to each rough scale, the interval between the rough scales of the abscissa is 16 times the resolution of the TDC, and each rough scale corresponds to one register. During a particular sweep $a$, a SPAD triggering occurs at the time scale 0, the time information tpi (corresponding to $x_{1a} = 0$) and the triggering count information $cnt_{1a}$ are obtained, $cnt_{1a}*(16 - x_{1a})$ is stored in the register A corresponding to the rough scale A, and $cnt_{1a}*x_{1a}$ is stored in the register A + 1 corresponding to the rough scale A + 1; at another time scale 5, the time information $tp_6$ (corresponding $x_{6a} = 5$) and the triggering count information $cnt_{6a}$ are obtained, and the data stored in the register A corresponding to the rough scale A is read out, added with $cnt_{6a}*(16 - x_{6a})$ and the sum is then stored in the register A; the data in the register A+1 corresponding to the rough scale A+1 is read out, added with $cnt_{6a}*x_{6a}$ and the sum is then restored in the register A+1. Within one rough scale time period (fine scale 0-15), all the triggering count information cnt is applied with weights, added with the original data and the sums are stored in the registers corresponding to the storage positions A and A+1. The triggering count information cnt within the next rough scale time period is applied with weights and then stored in the registers corresponding to the rough scales A+1 and A+2. For example, when the SPAD triggering occurs at the time point 2', the time information $tp_3'$ and $cnt_{3a}'$ are obtained, the data stored in the register A+1 corresponding to the rough scale A+1 is added with $cnt_{3a}'*(16 - x_{3a}')$, and $cnt_{3a}' * x_{3a}'$ is stored in the register A+2 corresponding to the rough scale A+2.

During the next sweep $b$, the signals $tp_2$ and $cnt_{2b}$ are received, weights for the rough scales A and A+1 are applied respectively to obtain $cnt_{2b}*(16 - x_{2b})$ and $cnt_{2b}*x_{2b}$, which are added with the originally stored data respectively and then the sums are respectively stored in the registers corresponding to the rough scales A and A+1. The histogram is obtained by accumulating the data of multiple sweeps, and during the multiple sweeps, the triggering counts cnt of all the triggering occurring at the time points 0~15 are stored in the registers corresponding to the rough scales A and A+1.

The comparison between the rough scale and the fine scale is shown in FIG. 8. With respect to the scheme in which one register is required for data storage at each fine scale, in embodiments of this disclosure, a data storage method with weighted accumulation is used, and the registers only need to be set corresponding to the rough scale of 0-n+1, and the number of registers required is reduced to 1/16 of the original number. Although the bit width of each register for storage is increased and the occupied space is increased, the total storage space can be reduced to 1/10 of the original storage space through the data storage method with weighted accumulation because the storage positions to be assigned are greatly reduced.

In the embodiments of FIGs. 6-8, the time interval of adjacent first time scales (rough scales) is 16 times the time resolution (fine scale) of the detection data of the LiDAR, that is, data is compressed using 16 as a weight. It is readily appreciated by those skilled in the art that this disclosure is not limited thereto, and the weight here can be any positive integer, preferably $2^m$, where m is a positive integer, thereby facilitating implementation in a field-programmable gate array ("FPGA") or an application-specific integrated circuit ("ASIC").

In the above-mentioned embodiments, the first weight is (16 - x), the second weight is x, and this disclosure is not limited thereto. The first weight can be x, the second weight can be (16 - x); or the first weight can be 1- (x/n), and the second weight can be x/n, as long as the first weight is associated with a time interval between the time point x and one of adjacent first time scales, and the second weight is associated with a time interval between the time point x and the other one of adjacent first time scales.

The storage method shown in FIGs. 5 to 8 can be applied to the storage of the first set of detection data and the second set of detection data in the above-mentioned data processing method 100.

Based on a preferred embodiment of this disclosure, the first set of detection data and the second set of detection data are stored in a first storage manner or a second storage manner. Specifically, the first storage manner includes storage at a first time precision (i.e., the precision corresponding to the rough scale in FIG. 6) based on the weight of the time information, where the first time precision can be a multiple of the time resolution of the LiDAR, for example, m times, and m is an integer greater than 1. Within a particular range, the smaller the value of m is, the higher the precision of the detection result is, and thus the calculation amount and storage space required are larger. The second storage manner includes storage based on the time resolution of the LiDAR (i.e., the fine scale in FIG. 5). The time resolution of the LiDAR, that is, the time resolution of the TDC, is a minimum time interval that can be identified when the TDC operates. In other words, a period of time to be measured is represented by using a reference signal with a relatively small time interval. The time interval of the reference signal is a measurement precision, and the smaller the value of time interval of the reference signal is, the higher the time resolution of the TDC is.

Because the first storage manner is performed at the first time precision, the second storage manner is performed at the second time precision, and the first time precision is lower than the second time precision, the storage space used in the first storage manner is less than the storage space used in the second storage manner.

Based on a preferred embodiment of this disclosure, the first set of detection data is stored in the first storage manner, and the second set of detection data is stored in the second storage manner. Because less storage space is used in the first storage manner than in the second storage manner, the data volume of the first set of detection data is less, the calculation amount is lower, and the position of the object obtained based on the first set of detection data is rougher.

Based on a preferred embodiment of this disclosure, the first storage manner also involves a weight. The weight includes a first weight and a second weight, the first weight is associated with a time interval between the time information and one of adjacent first time scales, and the second weight is associated with a time interval between the time information and the other one of adjacent first time scales.

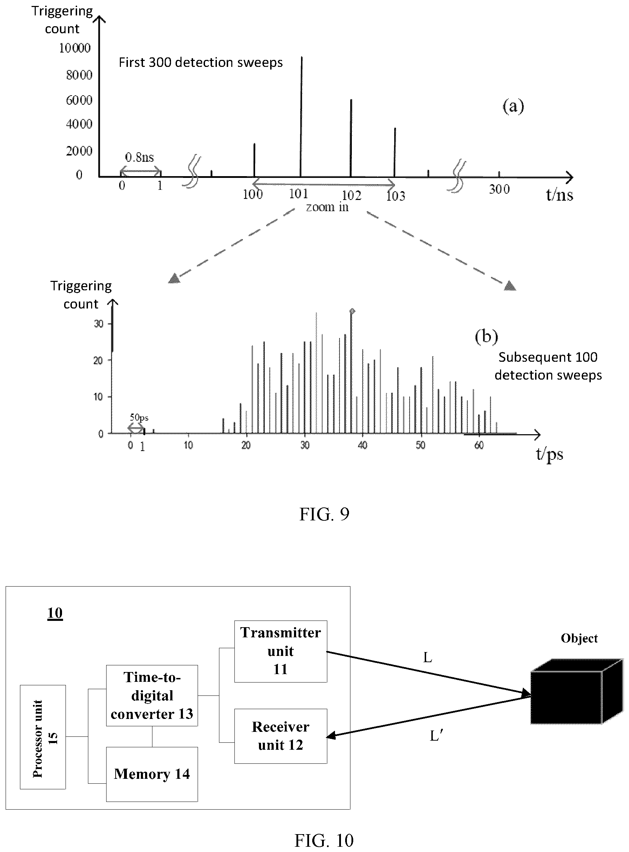

FIG. 9 shows a schematic diagram of a data processing method based on an embodiment of this disclosure, where the horizontal axis of the coordinate system of figure (a) is time, the interval of the time scale is T, the vertical axis is the number of triggered SPADs (corresponding to the intensity information), and the waveform shown in the figure corresponds a histogram formed when k = 300, that is, the histogram formed after accumulation of the first 300 detection sweeps; the horizontal axis of the coordinate system of figure (b) is also the time, the interval of the time scale is T', the vertical axis is the number of triggered SPADs, and the waveform shown in the figure corresponds a histogram formed when n = 100, that is, the histogram formed after accumulation of the subsequent 100 detection sweeps. One scale in the coordinate system of figure (a) can include 16 scales in the coordinate system of figure (b), because for the value of a highprecision triggering time point tp, its binary representation occupies a relatively large bit width, while it is compressed in figure (a), and the storage unit time is 16 times that of figure (b). The storage is performed with a 4-bit bit width in the figure as an example, and the actual bit width can be replaced with any other value based on the requirement of the system.

The rough scale of the 4-bit bit width includes 16 fine scales, and the comparison of the rough scale and the fine scale can be referred to FIG. 8. On the vertical axis, for figure (a), the histogram is obtained by compressing data using the data storage method with weighted accumulation; for figure (b), the histogram of raw data is generated by accumulating all SPAD triggering counts. 16 fine scales in figure (b) are accumulated into one rough scale in figure (a), and the triggering time point of the photon that arrives at the $x^{th}$ fine scale between the $A^{th}$ to $(A + 1)^{th}$ rough scales and the SPAD triggering count are stored by using different storage manners (weighted accumulation).

Specifically, when the first 300 detection sweeps are performed, the memory stores the first set of detection data based on the weighted accumulation method, and the detection data includes a triggering time point tp and a triggering count cnt. For example, one detector corresponds to nine SPADs, and cnt $\in$ (0, 9), that is, the maximum number of triggered SPADs is nine and the minimum number of triggered SPADs is zero. After 300 sweeps, data in the memory can be read to obtain a preliminary histogram, as shown in FIG. 9(a), the time resolution of the histogram is low and is 0.8 ns. Then, a possible rough position of an echo pulse can be obtained based on the preliminary histogram. For vertical coordinate, a particular threshold can be set, and the time range corresponding to the abscissas that exceed the threshold can be determined as the corresponding rough position of the echo pulse. Alternatively, instead of setting a threshold, the maximum value is directly used to determine the possible rough position of the echo pulse.

After the rough position of the echo pulse is acquired, the detection window for the subsequent detection sweeps is changed, and the detection information is accumulated and stored using the manner shown in FIG. 5 within the changed detection window.

Specifically, still referring to FIG. 9, as shown in figure (a), based on the result of the first 300 detection sweeps, it can be determined that the coordinate of the rough position of the echo is between 100 and 103, and the specific time is within the range of 100 × 0.8 ns to 103 × 0.8 ns. Therefore, during the subsequent 100 detection sweeps, zoom-in is performed within the range of 100 × 0.8 ns to 103 × 0.8 ns, and the data (whether the data is within the window range is determined based on the triggering time point tp) within such a time range can be stored using a relatively finer time scale based on the manner shown in FIG. 5, that is, the values of cnt are accumulated and saved to generate the histogram of an original signal, specifically, still referring to FIG. 5, where the abscissa is the time t, the scale interval of the abscissa is the time resolution of the TDC, and each time scale corresponds to one storage position R (register). For example, during a particular detection sweep, a SPAD triggering occurs at the time scale 0, the TDC transmits the time information tpi and the triggering count information cnti, and cnti is stored in the storage position R1 corresponding to the time point tpi. If a SPAD triggering occurs at the time scale 15, the TDC transmits the time information $tp_{16}$ and $cnt_{16}$, and $cnt_{16}$ is stored in the storage position R16 corresponding to $tp_{16}$. The histogram (corresponding to one point in the point cloud) is obtained by accumulating the data of 100 detection sweeps, and during the 100 detection sweeps, the sum of all of the count information cnt of the triggering occurring at the time point 0 is stored in R1. For a TDC, each time scale requires a corresponding storage position, and all of the count information cnt obtained from the 100 detection sweeps is stored in the storage positions corresponding to the time points.

The weighted accumulated histogram obtained from the first 300 detection sweeps and the histogram obtained from the subsequent 100 detection sweeps are accumulated, and information, such as TOF, distance of the object, and reflectivity of the object, is determined by using a centroid method or a leading-edge method. Preferably, the information such as TOF, distance of the object, and reflectivity of the object, is calibrated by using the stored histogram (a small section of the histogram) of the original pulse signal from the subsequent 100 detection sweeps.

In the embodiment of FIG. 9, the data from the first 300 detection sweeps is stored through weighted accumulation, the rough position information of the object is determined, the data from the subsequent 100 detection sweeps is stored in a fine storage manner within the changed detection window, and then the information about the object is calibrated. There can also be other variant embodiments. For example, the data from the first 300 detection sweeps is stored through weighted accumulation, the rough position of the object is determined, the data from the subsequent 100 detection sweeps is stored in a fine storage manner within the changed detection window, and then the information about the object is determined. For another example, the data of 400 detection sweeps is stored through weighted accumulation, the rough information of the object is determined, the data from the subsequent 100 detection sweeps is stored in a fine storage manner at the same time, and then the rough information about the object is calibrated. It should be understood by those skilled in the art that one detection is divided into two or more groups of detection sweeps, and then different storage manners are used for different groups, which are all within the protection scope of this disclosure.

In summary, the data storage method with weighted accumulation designed in this disclosure is used to compress the original signal while the ranging precision is preserved, thereby greatly reducing the storage space required for storing the histogram. The triggering time points to be processed subsequently are limited through the zoom-in operation, thereby reducing the unnecessary calculation amount and reducing the system power consumption. Moreover, the weighted accumulation is implemented in an FPGA or an IC, the calculation amount is determined by the triggering count, and in the subsequent measurement after the approximate range of the object is determined, by means of the zoom-in measurement, the calculation amount required for generating a histogram can be reduced while keeping track of the object, thereby reducing the system power consumption.

This disclosure further provides a LiDAR 10. The LiDAR 10 includes a transmitter 11, a receiver 12, a TDC 13, a memory 14, and a processor 15.

The transmitter 11 is configured to transmit a laser pulse to a three-dimensional environment to perform multiple detection sweeps.

The receiver 12 is configured to receive an echo pulse of the laser pulse reflected by an object and convert the echo pulse into an electrical signal.

The TDC 13 is coupled to the transmitter 11 and the receiver 12 to determine detection data.

The memory 14 is coupled to the TDC 13 and configured to store the detection data.

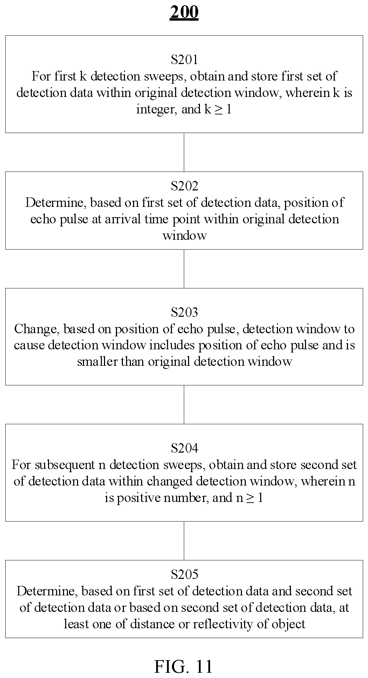

The processor 15 is coupled to the TDC 13 and the memory 14 and is configured to perform the following method 200 based on the flowchart shown in FIG. 11.

In step S201, for the first k detection sweeps, a first set of detection data within an original detection window is obtained and stored, where k is an integer, and $k \geq 1$.

In step S202, a position of an echo pulse at an arrival time point within the original detection window is determined based on the first set of detection data.

In step S203, the detection window is changed based on the position of the echo pulse so that the changed detection window includes the position of the echo pulse and is smaller than the original detection window.

In step S204, for the subsequent n detection sweeps, a second set of detection data within the changed detection window is obtained and stored, where n is a positive number, and $n \geq 1$.

In step S205, a distance and/or a reflectivity of the object are determined based on the first set of detection data and the second set of detection data.

Based on an embodiment of this disclosure, the detection data includes time information and intensity information corresponding to the time information obtained from each detection sweep, and step S102 further includes:

generating a first histogram based on the first set of detection data; and
on the first histogram, determining a time point corresponding to the maximum value of an amplitude or a time range in which an amplitude exceeds a predetermined threshold as the position of the echo pulse at the arrival time point within the original detection window.

Based on an embodiment of this disclosure, step S203 further includes: changing the detection window with the position of the echo pulse at the arrival time point within the original detection window as the center.

Based on an embodiment of this disclosure, the range of the original detection window is related to the predetermined maximum detection distance of the LiDAR 10, and step S204 further includes: not storing detection data outside the range of the changed detection window, or outside the range of the changed detection window, turning off the receiver 12, and performing no detection.

Based on an embodiment of this disclosure, step S205 further includes: determining, based on the first set of detection data and the second set of detection data, at least one of the distance or the reflectivity of the object, and calibrating, based on the second set of detection data, at least one of the distance or the reflectivity of the object.

Based on an embodiment of this disclosure, the first set of detection data and the second set of detection data are stored in a first storage manner or a second storage manner, where the first storage manner includes storage based on a weight of the time information at a first time precision, the second storage manner includes storage based on a time resolution of the LiDAR, the first time precision is m times the time resolution, and m > 1.

Based on an embodiment of this disclosure, the first set of detection data is stored in the first storage manner, and the second set of detection data is stored in the second storage manner.

Based on an embodiment of this disclosure, the weight includes a first weight and a second weight, the first weight is associated with a time interval between the time information and one of adjacent first time scales, the second weight is associated with a time interval between the time information and the other one of adjacent first time scales, and the first storage manner includes: storing the intensity information based on the first weight and the second weight, respectively, at the first time precision.

Based on an embodiment of this disclosure, the receiver includes a SPAD array, and the detection data includes a time point at which the SPAD array is triggered by a photon and the number of triggered SPADs.

This disclosure further relates to a computer-readable storage medium including computer-executable instructions stored thereon, where the computer-executable instructions, when executed by a processor, perform the data processing method described above.

Finally, it is to be noted that the above are merely preferred embodiments of this disclosure and are not intended to limit this disclosure. Although the embodiments of this disclosure are described in detail with reference to the above-mentioned embodiments, those skilled in the art can still modify the technical schemes described in the above-mentioned embodiments, or make equivalent substitutions on part of the technical features therein. Any modifications, equivalent substitutions, improvements and the like within the spirit and principle of this disclosure shall fall within the scope of protection of this disclosure.

**Claims**

1. A data processing method for a LiDAR, comprising:

    S101: performing k detection sweeps by using an original detection window to obtain a result of the k detection sweeps as a first set of detection data, wherein k is an integer, and k ≥ 1;
    S102: determining, based on the first set of detection data, a position of an echo pulse at an arrival time point within the original detection window;
    S103: changing, based on the position of the echo pulse, a detection window, wherein the changed detection window comprises the position of the echo pulse and is smaller than the original detection window;
    S104: performing n detection sweeps by using the changed detection window to obtain a result of the n detection sweeps as a second set of detection data, wherein n is an integer, and n ≥ 1; and
    S105: determining, based on the first set of detection data and the second set of detection data or based on the second set of detection data, at least one of a distance or a reflectivity of an obj ect.

2. The data processing method of claim 1, wherein the first set of detection data and the second set of detection data comprise time information and intensity information corresponding to the time information obtained during the detection sweeps, and step S102 further comprises:

    generating, based on the first set of detection data, a first histogram; and
    on the first histogram, determining a time point corresponding to a maximum value of an amplitude as the position of the echo pulse, or determining a time range in which an amplitude exceeds a predetermined threshold as the position of the echo pulse.

3. The data processing method of claim 1, wherein step S103 further comprises: changing the detection window with the position of the echo pulse as a center.

4. The data processing method of claim 1, wherein a range of the original detection window is related to a predetermined maximum detection distance of the LiDAR, and step S104 further comprises: not storing detection data outside a range of the changed detection window, or outside a range of the changed detection window, turning off a receiver, and performing no detection.

**5.** The data processing method of any one of claims 1 to 4, wherein step S105 comprises:
determining, based on the first set of detection data and the second set of detection data, at least one of the distance or the reflectivity of the object, and calibrating, based on the second set of detection data, at least one of the distance or the reflectivity of the object.

**6.** The data processing method of claim 1, wherein the first set of detection data and the second set of detection data are stored in a first storage manner or a second storage manner, wherein the first storage manner comprises storage based on a weight of the time information at a first time precision, the second storage manner comprises storage based on a time resolution of the LiDAR, the first time precision is m times the time resolution, and m > 1.

**7.** The data processing method of claim 6, wherein the first set of detection data is stored in the first storage manner, and the second set of detection data is stored in the second storage manner.

**8.** The detection method of claim 6 or 7, wherein the weight comprises a first weight and a second weight, the first weight is associated with a time interval between the time information and one of adjacent first time scales, the second weight is associated with a time interval between the time information and the other one of adjacent first time scales, and the first storage manner comprises: storing the intensity information based on the first weight and the second weight, respectively, at the first time precision.

**9.** The data processing method of any one of claims 1 to 4, wherein the k detection sweeps and the n detection sweeps jointly complete one detection for one point in a three-dimensional environment, and k > n.

**10.** A LiDAR, comprising:

a transmitter, configured to transmit a laser pulse to a three-dimensional environment to perform multiple detection sweeps;
a receiver, configured to receive an echo pulse of the laser pulse reflected by an object and convert the echo pulse into an electrical signal;
a time-to-digital converter, coupled to the transmitter unit and the receiver unit to determine detection data;
a memory, coupled to the time-to-digital converter and configured to store the detection data; and
a processor, coupled to the time-to-digital converter and the memory and configured to perform the following operations:

S201: for first k detection sweeps, obtaining and storing a first set of detection data within an original detection window, wherein k is an integer, and k ≥ 1;
S202: determining, based on the first set of detection data, a position of an echo pulse at an arrival time point within the original detection window;
S203: changing, based on the position of the echo pulse, a detection window, wherein the changed detection window comprises the position of the echo pulse and is smaller than the original detection window;
S204: for subsequent n detection sweeps, obtaining and storing a second set of detection data within the changed detection window, wherein n is a positive number, and n ≥ 1; and
S205: determining, based on the first set of detection data and the second set of detection data or based on the second set of detection data, at least one of a distance or a reflectivity of the obj ect.

**11.** The LiDAR of claim 10, wherein the detection data comprises time information and intensity information corresponding to the time information obtained from each detection sweep, and step S202 further comprises:

generating a first histogram based on the first set of detection data; and
on the first histogram, determining a time point corresponding to a maximum value of an amplitude as the position of the echo pulse, or determining a time range in which an amplitude exceeds a predetermined threshold as the position of the echo pulse.

**12.** The LiDAR of claim 10, wherein step S203 comprises: changing the detection window with the position of the echo pulse as a center.

**13.** The LiDAR of claim 10, wherein a range of the original detection window is related to a predetermined maximum detection distance of the LiDAR, and step S204 further comprises: not storing detection data outside a range of the changed detection window, or outside a range of the changed detection window, turning off the receiver, and performing no detection.

**14.** The LiDAR of any one of claims 10 to 13, wherein step S205 further comprises:
determining, based on the first set of detection data and the second set of detection data, at least one of the distance or the reflectivity of the object, and calibrating, based on the second set of detection data, at least one of the distance or the reflectivity of the object.

**15.** The LiDAR of claim 10, wherein the first set of detection data and the second set of detection data are stored in a first storage manner or a second storage manner, wherein the first storage manner comprises storage based on a weight of the time information at a first time precision, the second storage manner comprises storage based on a time resolution of the LiDAR, the first time precision is m times the time resolution, and m > 1.

**16.** The LiDAR of claim 15, wherein the first set of detection data is stored in the first storage manner, and the second set of detection data is stored in the second storage manner.

**17.** The LiDAR of claim 15, wherein the weight comprises a first weight and a second weight, the first weight is associated with a time interval between the time information and one of adjacent first time scales, the second weight is associated with a time interval between the time information and the other one of adjacent first time scales, and the first storage manner comprises: storing the intensity information based on the first weight and the second weight, respectively, at the first time precision.

**18.** The LiDAR of any one of claims 10 to 13, wherein the receiver comprises a SPAD array, and the detection data comprises a time point at which the SPAD array is triggered by photon and a number of triggered SPADs.

**19.** A computer-readable storage medium comprising computer-executable instructions stored thereon, wherein the computer-executable instructions, when executed by a processor, perform the data processing method of any one of claims 1 to 9.

FIG. 1

FIG. 2

## 100

S101
Perform k detection sweeps by using original detection window to obtain result of k detection sweeps as first set of detection data, wherein k is integer, and k ≥ 1

S102
Determine, based on first set of detection data, position of echo pulse at arrival time point within original detection window

S103
Change, based on position of echo pulse, detection window wherein changed detection window includes position of echo pulse and is smaller than original detection window

S104
Perform n detection sweeps by using changeed detection window to obtain result of n detection sweeps as second set of detection data, wherein n is integer, and n ≥ 1

S105
Determine, based on first set of detection data and second set of detection data or based on second set of detection data, at least one of distance or reflectivity of object

FIG. 3

**22**

FIG. 4

FIG. 5

16-x ← x → x

A    A+1

0 1 2 3    15 16
0

**FIG. 6**

A    A+1    A+2

0  1  2  3  4  5    15  16/0'  1'  2'    15'  16'/0"    t

Detection sweep a
tp1    tp6    tp3'    tp16'
cnt1a    cnt6a    cnt3a'    cnt16a'

Detection sweep b
tp2    tp16    tp2'    tp8'
cnt2b    cnt16b    cnt2b'    cnt8b'

Memory position R

$cnt_{1a}(16-x_{1a})+$
$cnt_{4a}(16-x_{4a})+$
$cnt_{2b}(16-x_{2b})+$
$cnt_{16b}(16-x_{16b})$
$+\square\square$

A

$cnt_{1a}x_{1a}+$
$cnt_{6a}x_{6a}+$
$cnt_{2b}x_{2b}+$
$cnt_{16b}x_{16b}+$
$cnt_{3a}'(16-x_{3a}')+$
$cnt_{16a}'(16-x_{16a}')+$
$cnt_{2b}'(16-x_{2b}')+$
$cnt_{8a}'(16-x_{8a}')$
$+\square\square$

A+1

$cnt_{3a}'x_{3a}'+$
$cnt_{16a}'x_{16a}'+$
$cnt_{2b}'x_{2b}'+$
$cnt_{8a}'x_{8a}'$
$\square\square$

A+2

**FIG. 7**

0    1    2    n    n+1

0 1 2    15 0 1 2    15    0 1    15

**FIG. 8**

FIG. 9

FIG. 10

**200**

```
S201
For first k detection sweeps, obtain and store first set of
detection data within original detection window, wherein k is
integer, and k ≥ 1
```

```
S202
Determine, based on first set of detection data, position of
echo pulse at arrival time point within original detection
window
```

```
S203
Change, based on position of echo pulse, detection window to
cause detection window includes position of echo pulse and is
smaller than original detection window
```

```
S204
For subsequent n detection sweeps, obtain and store second set
of detection data within changed detection window, wherein n
is positive number, and n ≥ 1
```

```
S205
Determine, based on first set of detection data and second set
of detection data or based on second set of detection data, at
least one of distance or reflectivity of object
```

FIG. 11

## INTERNATIONAL SEARCH REPORT

| International application No. |
|---|
| **PCT/CN2022/081303** |

### A. CLASSIFICATION OF SUBJECT MATTER

G01S 7/4865(2020.01)i;  G01S 17/89(2020.01)i

According to International Patent Classification (IPC) or to both national classification and IPC

### B. FIELDS SEARCHED

Minimum documentation searched (classification system followed by classification symbols)

G01S 7/+,; G01S17/+

Documentation searched other than minimum documentation to the extent that such documents are included in the fields searched

Electronic data base consulted during the international search (name of data base and, where practicable, search terms used)

VEN, CNTXT, ENTXT, 百度学术, BAIDU SCHOLAR: 雷达, 激光, 接收, 探测, 像素, 窗口, 调整, 可调, 动态, 激活, 开启, 关闭, 禁用, 距离, 测距, 远, 近, lidar, SPAD, receiv+, detect+, pixel+, adjust+, enabl+, disabl+, far, near, distance, rang+

### C. DOCUMENTS CONSIDERED TO BE RELEVANT

| Category* | Citation of document, with indication, where appropriate, of the relevant passages | Relevant to claim No. |
|---|---|---|
| X | CN 111812661 A (SHENZHEN AORUIDA TECHNOLOGY CO., LTD.) 23 October 2020 (2020-10-23)<br>description, paragraphs [0028]-[0069], and figures 2 and 3 | 1-19 |
| X | WO 2021117359 A1 (SONY SEMICONDUCTOR SOLUTIONS CORP.) 17 June 2021 (2021-06-17)<br>description, paragraphs [0002]-[0009] | 1-19 |
| X | CN 109212538 A (APPLE INC.) 15 January 2019 (2019-01-15)<br>description, paragraphs [0026]-[0029] | 1-19 |
| X | CN 110609293 A (SHENZHEN AORUIDA TECHNOLOGY CO., LTD.) 24 December 2019 (2019-12-24)<br>description, paragraphs [0047]-[0062] | 1-19 |
| X | US 2017301716 A1 (QUALCOMM INC.) 19 October 2017 (2017-10-19)<br>description, paragraphs [0018]-[0023] | 1-19 |
| A | US 2019259899 A1 (TOYOTA CHUO KENKYUSHO K.K.) 22 August 2019 (2019-08-22)<br>entire document | 1-19 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 May 2022** | **30 May 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/081303**

| Patent document cited in search report | | | Publication date (day/month/year) | Patent family member(s) | | | Publication date (day/month/year) |
|---|---|---|---|---|---|---|---|
| CN | 111812661 | A | 23 October 2020 | None | | | |
| WO | 2021117359 | A1 | 17 June 2021 | JP | 2021092437 | A | 17 June 2021 |
| CN | 109212538 | A | 15 January 2019 | US | 2021003680 | A1 | 07 January 2021 |
| | | | | CN | 208805571 | U | 30 April 2019 |
| | | | | EP | 3646057 | A1 | 06 May 2020 |
| | | | | DE | 202018002044 | U1 | 25 June 2018 |
| | | | | WO | 2019005260 | A1 | 03 January 2019 |
| | | | | US | 2019004156 | A1 | 03 January 2019 |
| CN | 110609293 | A | 24 December 2019 | None | | | |
| US | 2017301716 | A1 | 19 October 2017 | WO | 2017180277 | A1 | 19 October 2017 |
| | | | | HU | E048828 | T2 | 28 August 2020 |
| | | | | BR | 112018071077 | A2 | 05 February 2019 |
| | | | | ES | 2798927 | T3 | 14 December 2020 |
| | | | | EP | 3443377 | A1 | 20 February 2019 |
| | | | | CN | 108885251 | A | 23 November 2018 |
| | | | | KR | 20180115799 | A | 23 October 2018 |
| | | | | JP | 2019518200 | A | 27 June 2019 |
| | | | | CA | 3017223 | A1 | 19 October 2017 |
| US | 2019259899 | A1 | 22 August 2019 | JP | 2019145702 | A | 29 August 2019 |

Form PCT/ISA/210 (patent family annex) (January 2015)